# EUROPEAN PATENT SPECIFICATION

(11) **EP 0 686 485 B1**
(45) Date of publication and mention of the grant of the patent: **21.08.2002**
(21) Application number: 95303992.2
(22) Date of filing: 09.06.1995
(51) Int. Cl.: B29D 11/00, B29C 37/00, B29C 33/26, B29C 33/34

(54) **Laser demolding apparatus and method**
Verfahren und Vorrichtung zur Laser-Entformung
Procédé et dispositif de démoulage par laser

(30) Priority: 10.06.1994 US 257801
(43) Date of publication of application: 13.12.1995
(73) Proprietor: JOHNSON & JOHNSON VISION PRODUCTS, INC., Jacksonville, Florida 32216 (US)
(72) Inventor: Dagobert, Henri Armand, Jacksonville, Florida 32217 (US); Walker, Craig William, Jacksonville, Florida 32224 (US)
(74) Representative: Mercer, Christopher Paul

(56) References cited:
- EP-A- 0 183 324
- EP-A- 0 227 365
- EP-A- 0 576 196
- EP-A- 0 588 660
- FR-A- 2 662 969
- GB-A- 1 092 749
- GB-A- 1 137 007
- GB-A- 2 161 111
- US-A- 1 852 705
- US-A- 3 624 672
- US-A- 4 402 659
- US-A- 4 889 664

## Description

### BACKGROUND OF THE INVENTION

### 1. Field of the Invention

The present invention relates generally to a laser demolding apparatus and method, wherein a molded assembly, comprising a front curve, a spaced back curve and a molded contact lens formed therebetween, are separated or demolded in a manner which improves the efficiency of the demolding operation.

More particularly, the subject invention pertains generally to methods and apparatus for producing ophthalmic lenses, and in particular to a method and apparatus for the improved removal of molded ophthalmic lenses from the molds in which they are produced. In particular, this invention is suited to molded ophthalmic lenses such as hydrogen contact lenses, although the method is also applicable to other small, high-precision ophthalmic lenses such as intraocular lenses.

### 2. Discussion of the Prior Art

As the ophthalmic lens industry has grown, and in particular the industry related to supplying contact lenses that are provided for periodic frequent replacement, the number of contact lenses that need to be produced has increased dramatically. This has required manufacturers to strive for automated methods and apparatus which are adaptable to automated practices and consistent performance.

It is known in the art to make ophthalmic lenses, such as soft contact lenses, by forming a monomer or monomer mixture in a mold such as one made from polystyrene or polypropylene.

Examples of this prior art can be found in U.S. Patents 5,039,459, 4,889,664 and 4,565,348. These patents discuss therein the requirement for a polystyrene mold in which the materials, chemistry and processes are controlled such that the mold portions do not require undue force to separate by sticking to the lens or to each other. In contrast to the above polystyrene molds, another example is the use of polypropylene or polyethylene molds such as described in U.S. Patent 4,121,896.

The mold assembly to mold an ophthalmic contact lens typically includes a lower concave mold portion (referred to as a front curve), and an upper convex mold portion (referred to as a back curve). The concave surface of the lower front curve and the convex surface of the upper back curve define therebetween a mold cavity for a contact lens. A particular problem in the prior art is that the front and back mold portions are usually surrounded by a flange, and the monomer or monomer mixture is supplied in excess to the concave mold portion prior to the assembly of the molds. After the mold portions are placed together, defining the lens and forming an edge, the excess monomer or monomer mixture is expelled from the mold cavity and rests on or between the flange of one or both mold portions. Upon polymerization, this excess material forms an annular flange or ring around the formed lens which resists separation of the mold portions during a demolding operation.

The prior art process for separating the mold portions and removing the lens consists of preheating, heating, prying and removal. Hot air provides convective heating, mechanical leverage the prying, and the removal is manual. Heating the mold by convection is not an efficient heat transfer technique, and in the prior art, from the time a mold enters the heating apparatus until the back mold portion is completely removed requires on the order of one minute.

A prior art method for removing the lens is to apply heat to the back mold portion by a heated air stream. The heated air stream is directed against the exterior of the back mold portion where it transfers heat to the upper surface of the lens. Heat is then transported by thermal conduction through the back mold, the molded lens, and the front mold. The heating of the back mold portion is performed in two sequential steps, a preheat stage and a heat/pry stage. In the heat/pry stage the mold is clamped in place, and pry fingers are inserted under the back mold portion. A force is then applied to each back mold portion by the pry fingers during a heating cycle.

When the required temperature has been reached, the back mold portion breaks free and one end thereof is lifted by the pry fingers. After the back mold portion has been detached from the front mold portion on at least one side, the mold exits the heater. The back mold portion and annular flashing are then totally removed.

While the aforementioned method has some efficacy in assisting in the removal of the lens from between the mold portions, the temperature gradient achieved from the heated back mold portion, across the lens to the front mold portion is relatively small. The shortcomings in this approach result from the manner in which heat is delivered to the mold portion. The constant temperature air stream heats the exterior surface of the back mold portion, while thermal conduction transfers heat to the lens surface. The only way to increase the thermal gradient is to transfer heat faster, but this would cause the back mold portion to become too soft for the lift fingers to engage.

This prior art method has not been entirely satisfactory because the induced thermal gradient is not sufficient to fully and repeatedly separate the mold portions. EP-A-0 588 660 suggests heating one of the mold portions with an electromagnetic lazer. This achieves an increased temperature gradient across the mold portion, without causing thermal decomposition of the lens.

### SUMMARY OF THE INVENTION

Accordingly, it is a primary object of the present invention to provide an improved laser demolding apparatus and method that can easily and repeatedly separate contact lens mold portions without damaging the contact lens formed therebetween.

A further object of the subject invention is the provision of a method and apparatus for separating a back curve mold from a front curve mold of a contact lens mold assembly wherein a substantial temperature gradient is applied across at least one of the mold portions. In a preferred embodiment, a substantial temperature gradient is created between the back curve mold and a contact lens formed in a cavity between the two mold portions.

Another object of the present invention is to provide an automated apparatus to mechanically and reliably pry the mold halves apart in a consistent and reliable manner to thereby enhance the production of defect-free contact lenses, and minimize tearing of the lens and breakage of the lens mold parts.

A further object of the subject invention to perform such separation without excessive environmental heating or waste of energy.

In accordance with the teachings herein, the present invention provides an apparatus an described in claim 1 for demolding a mold assembly, which includes a first front mold portion having a central mold section with a surrounding flange, and a corresponding second back mold portion also having a central mold section with a surrounding flange. In a preferred embodiment, the first mold portion is a concave front curve mold half, and the second mold portion is a convex back curve mold half, with a contact lens being molded between the first and second mold halves. The flanges of the front and back mold portions are spaced apart and parallel to each other. The demolding apparatus includes restraining means for restraining the first mold portion of the mold assembly, which includes restraining fingers positioned between and on opposite sides of the spaced flanges of the first and second mold portions and against the flange of the first mold portion. The demolding apparatus also includes a separating fixture which includes separating fingers positioned between and on opposite sides of the spaced flanges of the first and second mold portions and against the flange of the second mold portion. During demolding, the separating fixture is rotated relative to the restraining means to progressively separate and peel the second mold portion from the first mold portion. The second mold portion is then lifted upwardly to remove it from the first mold portion.

In greater detail, before demolding, the second mold portion is irradiated with electromagnetic radiation, which is absorbed thereby to cause a substantial temperature gradient between the second mold portion and the contact lens being demolded. The temperature gradient causes a differential expansion and shifting of the surface of the heated second mold portion relative to the surface of the lens to lessen the adhesion therebetween to assist in the separation of the mold portions, while leaving the lens in the first mold portion. The second mold portion is preferably irradiated by a laser producing radiation with a wavelength between 1 µm and 20 µm. The separating fingers are joined together to form a U-shaped separator, and the laser beam is directed through the U opening in the U-shaped separator to irradiate the second mold portion.

The mold assembly is carried by a pallet, which carries an array of similar mold assemblies, and a conveyor conveys the pallet into a demolding position in the demolding apparatus. The conveyor conveys the mold assembly on the pallet into the demolding apparatus, to insert the restraining fingers and the separating fingers between the flange members of the mold assembly. The restraining fingers are positioned against the flange of the first mold portion and the separating fingers are positioned against the flange of the second mold portion. The separating fixture is supported by a pivot shaft for rotation relative to the fixedly mounted restraining means, and during the demolding operation the separating fixture is rotated through an angle of approximately 18 degrees. A control system sequentially actuates the conveyor to convey the mold assembly into a demolding position in the demolding apparatus, and then actuates rotation of the separation fixture to sequentially lift and peel the back curve mold portion from the restrained front curve mold portion, to thereby separate the back curve mold portion from the front curve mold portion and the contact lens retained therein.

A plurality of contact lens mold assemblies are carried on a pallet, and the demolding apparatus includes a plurality of pairs of restraining means and separating fixtures. In one preferred embodiment, the pallet carries two rows of contact lens mold assemblies, and the demolding apparatus includes a first set of restraining means and separating fixtures positioned on a first side of the pallet and a second set positioned on a second side of the pallet.

The separating fixture pivot shaft is spaced a distance from the restraining means, and is mounted on a first movable base for elevational movement relative to the fixedly mounted restraining means. The first movable base is pivotally mounted at one end about a rotational shaft, and the separating fixture is mounted at the second, opposite end of the first movable base. The arrangement further includes a ramp cam driven by a pneumatic motor. The first movable base includes a cam follower roller positioned on the ramp cam, such that as the ramp cam is driven by the pneumatic motor, the cam follower roller rotates the first movable base about the rotational shaft to raise and lower the separating fixture. The first movable base is mounted on a second movable base which is mounted for both X and Y translational movements relative to a fixed base. An X pneumatic drive motor drives the second movable base in X translational movement, and a Y pneumatic drive motor drives the second movable base in Y translational movement relative to the fixed base.

The separating fixture includes a gripping means for gripping a second mold portion which is separated from a first mold portion. A back curve mold remover is provided to remove the back curve mold portion from the separating fixture after separation of the mold portions. The separating fixture is translated relative to the back curve remover, during which translation the back curve mold portion is removed from the separating fixture. The back curve remover is vertically movable into and out of a back curve removal position relative to the separating fixture.

The present invention also provides a method as described in claim 26 for demolding a mold assembly, which includes a first front mold portion having a central mold section with a surrounding flange, and a corresponding second back mold portion having a central mold section with a surrounding flange. A molded ophthalmic lens is formed between the front and back mold portions, and the flanges of the front and back mold portions are spaced apart and parallel to each other. The method comprises restraining the first mold portion of the mold assembly by restraining fingers which are positioned between and on opposite sides of the spaced flanges of the first and second mold portions and against the flange of the first mold portion. Separating fingers are positioned between and on opposite sides of the spaced flanges of the first and second mold portions and against the flange of the second mold portion. The separating fingers are rotated relative to the restrained first mold portion to progressively separate and peel the second mold portion from the first mold portion. The second portion is then to lifted upwardly to remove it from the first mold portion.

In a preferred embodiment of the method, the second mold portion is irradiated with electromagnetic radiation, which is absorbed thereby to cause a substantial temperature gradient between the second mold portion and the contact lens being demolded. The temperature gradient causes a differential expansion and shifting of the surface of the heated second mold portion relative to the surface of the lens, lessening the adhesion between the lens and the second mold portion to assist in the separation of the mold portions, while leaving the lens in the first mold portion. The second mold portion is preferably irradiated by a laser producing radiation with a wavelength between 1 µm and 20 µm. A laser beam is directed through the separating fingers to irradiate the second mold portion.

Pursuant to the method, the mold assembly is carried by a pallet, which carries an array of similar mold assemblies, and the pallet is conveyed into a position wherein the restraining fingers and separating fingers are positioned between the spaced flanges of the first and second mold portions, with the restraining fingers against the flange of the first mold portion and the separating fingers against the flange of the second mold portion. During the demolding operation, the separating fingers are rotated through an angle of approximately 18 degrees. The separating fingers grip a second mold portion which is separated from a first mold portion. The back curve mold portion is removed from the separating fingers after separation of the mold portions. The mold assembly is conveyed to insert the restraining fingers and separating fingers between the flange members of the mold assembly, and then the separating fingers are rotated to sequentially lift and peel the back curve mold portion relative to the front curve mold, thereby separating the back curve mold portion from the front curve mold portion and the contact lens retained therein. A plurality of mold assemblies are carried on the pallet in two rows, and a first set of restraining fingers and separating fingers are positioned on a first side of the pallet, and a second set of restraining fingers and separating fingers are positioned on a second side of said pallet.

### BRIEF DESCRIPTION OF THE DRAWINGS

The foregoing objects and advantages of the present invention for a laser demolding apparatus and method may be more readily understood by one skilled in the art with reference being had to the following detailed description of several preferred embodiments thereof, taken in conjunction with the accompanying drawings wherein like elements are designated by identical reference numerals throughout the several views, and in which:
Figure 1 illustrates a front elevational view of a pallet which holds therein a two by four array of contact lens mold assemblies, each of which consists of a lower front curve mold and an upper back curve mold, defining therebetween a mold cavity for a contact lens;
Figure 2 is an enlarged side elevational and sectional view of a contact lens mold assembly, illustrating details of construction of a lower front curve mold and an upper back curve mold;
Figure 3 illustrates a preferred sequence of movements of a separating finger member, mounted on an articulated separating arm, relative to a pallet supporting thereon an array of front and back curve assemblies;
Figure 4 is a view of a fixture apparatus for separating mold portions according to one aspect of the present invention;
Figure 5 is a front elevational view of one preferred embodiment of a demolding apparatus pursuant to the present invention;
Figure 6 is a top plan view of the demolding apparatus taken along arrows 6-6 in Figure 5;
Figure 7 is a right side elevational view of the demolding apparatus taken along arrows 7-7 in Figure 5;
Figure 8 is a top plan view similar to Figure 5, illustrating the demolding apparatus positioned adjacent to a conveyor system for the sequential movement of pallets containing contact lens mold assemblies through the demolding apparatus;
Figure 9 is a top planar view of the front curve retaining means used in the laser demolding embodiment of the present invention;
Figure 10 is a partially cross-sectional view of a portion of the laser demolding embodiment of Figure 9, further illustrating the front curve retaining guides; and
Figure 11 illustrates a side elevational view of a back curve scraper for removing the back curves and depositing them into a receptacle.

### DETAILED DESCRIPTION OF THE DRAWINGS

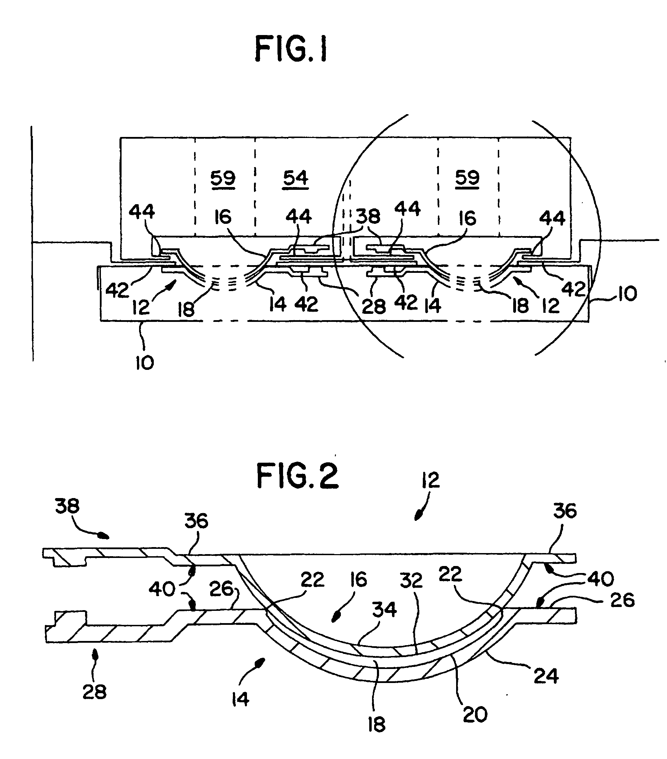

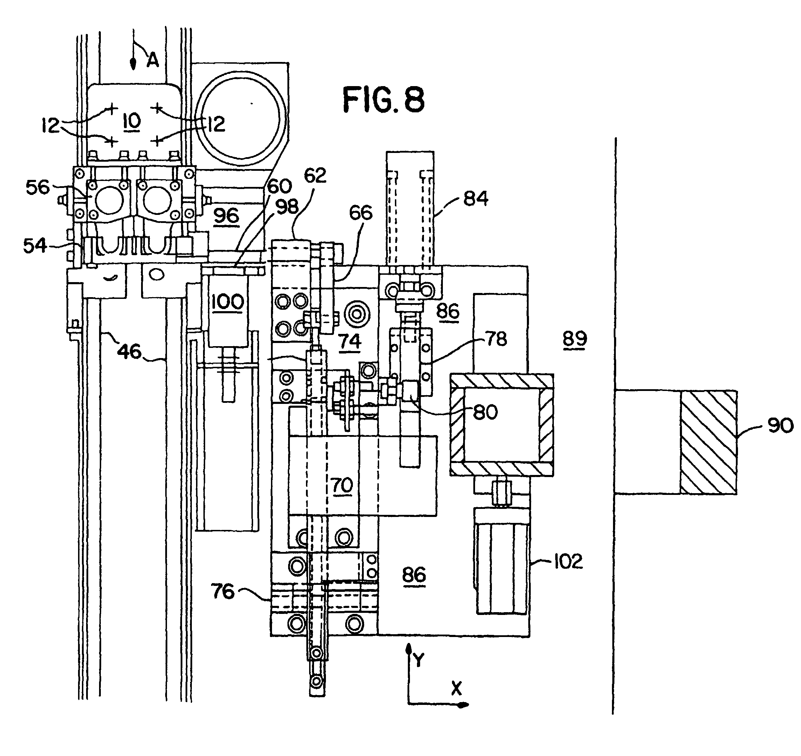

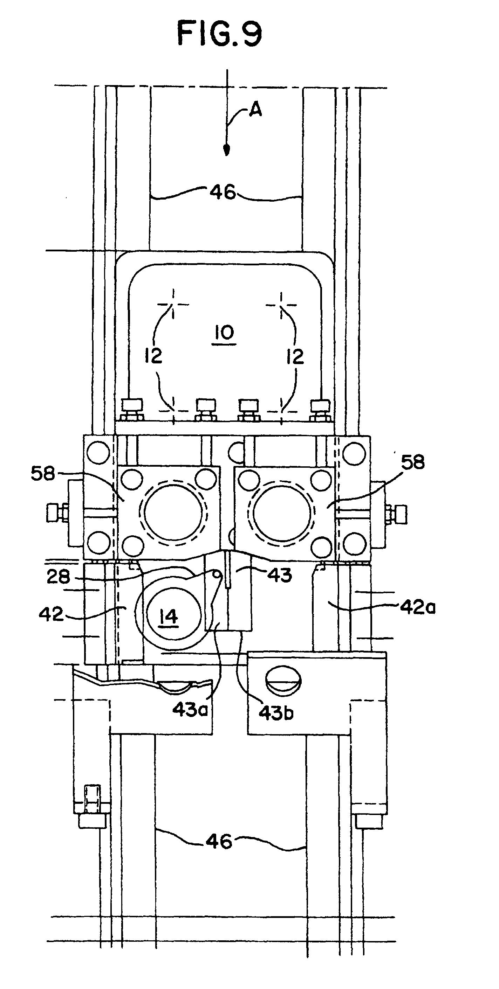

Referring to the drawings in detail, Figure 1 illustrates a front elevational view of a pallet 10 which holds thereon an array, typically a two by four array, of contact lens mold assemblies 12, as illustrated in further detail in Figures 8 and 9 wherein each mold assembly is illustrated schematically by a +.

In the laser demolding apparatus, pallets 10 containg contact lens mold assemblies are advanced sequentially in the direction of arrow A, Figures 8 and 9, by a conveyor system into and then through the laser demolding apparatus. The pallets 10 are advanced by push blocks on the conveyor system, and are initially incrementally advanced to advance an entire pallet length, and are then incrementally advanced a smaller distance equal to the distance between centers of pairs of mold assemblies carried on the pallet 10. This enables the laser demolding apparatus to demold a pair of mold assemblies after each advance between pairs, and when the last pair is demolded, a new pallet is then advanced into an initial position in the demolding apparatus, as illustrated in Figure 8.

Figure 2 is a side elevational and sectional view of one contact lens mold assembly 12 which consists of a lower front curve mold 14 and an upper back curve mold 16, defining therebetween a mold cavity 18 for a contact lens.

The front and back mold halves 14 and 16 are preferably formed of polystyrene but could be any suitable thermoplastic polymer which is sufficiently transparent to ultraviolet light to allow irradiation therethrough with light to promote the subsequent polymerization of a soft contact lens. A suitable thermoplastic such as polystyrene also has other desirable qualities such as being moldable to surfaces of optical quality at relatively low temperatures, having excellent flow characteristics and remaining amorphous during molding, not crystallizing, and have minimal shrinkage during cooling.

The front mold half 14 defines a central curved section with an optical quality concave surface 20, which has a circular circumferential knife edge 22 extending therearound. The knife edge 22 is desirable to form a sharp and uniform plastic radius parting line (edge) for the subsequently molded soft contact lens. A generally parallel convex surface 24 is spaced from the concave surface 20, and an annular essentially uniplanar flange 26 is formed extending radially outwardly from the surfaces 20 and 24. The concave surface 20 has the dimensions of the front curve (power curve) of a contact lens to be produced by the mold assembly, and is sufficiently smooth such that the surface of a contact lens formed by polymerization of a polymerizable composition in contact with the surface is of optically acceptable quality. The front mold half is designed with a thinness, typically 0.8 mm, and rigidity effective to transmit heat therethrough rapidly and to withstand prying forces applied to separate the mold half from the mold assembly during a demolding operation. The front mold half 14 further defines a generally triangular tab 28, Figures 2 and 9, integral with the flange 26 which projects from one side of the flange. Tab 28 is essentially uniplanar and extends to an injection hot tip which supplies molten thermoplastic to form the front mold half.

The back mold half 16 defines a central curved section with an optical quality convex surface 32, a generally parallel concave surface 34 spaced from the convex surface 32, and an annular essentially uniplanar flange 36 formed extending radially outwardly from the surfaces 32 and 34. The convex surface 32 has the dimensions of the rear curve (which rests upon the cornea of the eye) of a contact lens to be produced by the back mold half, and is sufficiently smooth such that the surface of a contact lens formed by polymerization of a polymerizable composition in contact with the surface is of optically acceptable quality. The back mold half is designed with a thinness, typically 0.6 mm, and rigidity effective to transmit heat therethrough rapidly and to withstand prying forces applied to separate the mold half from the mold assembly during demolding. The back mold half 16 also defines a generally triangular tab 38, similar to the triangular tab 28, integral with the flange which projects from one side of the flange. The tab 38 extends to an injection hot tip which supplies molten thermoplastic to form the back mold half.

The flanges 26 and 36 are designed to assist in demolding and part handling, and also protect the optical surfaces and the knife edge. The geometry of the triangular tabs 28 and 38 serves an additional function in straightening and orienting the assembled front curve/back curve assembly 12 prior to demolding. When a front mold half or curve 14 is assembled with a back mold half or curve 16, a gap 40 is formed between the two spaced flanges and projecting tabs which is important for demolding. The gap between the tabs is preferably in the range of 1.5 mm-3.0 mm, and is required to assist in the demolding operation, as explained in greater detail hereinbelow.

Referring to Figures 1 and 2, the contact lens mold assemblies 12 are supported in the pallet 10 with the annular flanges 26 and tabs 28 of the front curve mold 14 recessed slightly below the upper surface of the pallet 10. The annular flanges 36 and tabs 38 of the back curve mold 16 are raised above the upper surface of the pallet, to allow retaining fingers 42 and lifting or prying fingers 44 to slide between the spaced flanges 26, 36 of the front and back curves. The retaining fingers 42 are positioned above opposite sides of the flange 26 around the front curve 14 to restrain the front curve 14 in the pallet and against upward movement. The lifting fingers 44 are positioned below opposite sides of the flange 36 around the back curve 16 to lift and pry the back curve from the restrained front curve.

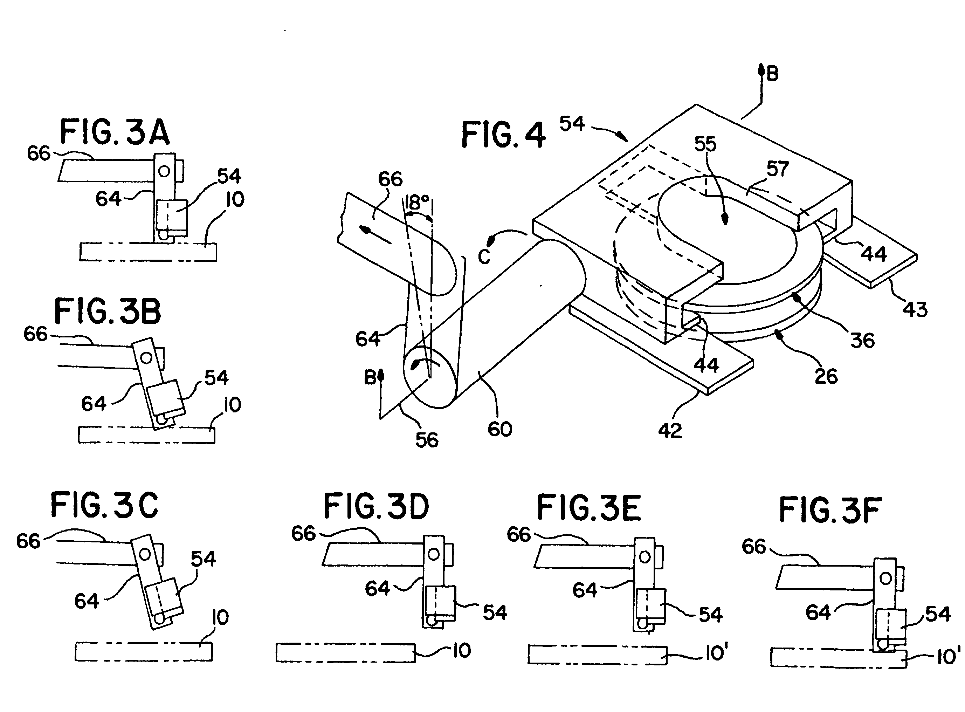

Referring to Figure 4, the thin metal pry fingers 44, which are shown positioned underneath the back mold portion flange 36, are machined flat on both sides. The pry fixture 54 rotates about axis 56 so that after exposure of the rear mold portion 16 to the laser, the pry fingers 44 pry the back mold portion up. Whereas it was found that merely prying off the back mold portion in an arbitrary fashion was acceptable, when the metal fingers are stopped under the flange 36, and are then tilted back, the overall quality of the removed lens was as good or better than currently employed techniques. During the demolding separation, the back curve is physically peeled from the front curv and molded contact lens therein, similar to the peeling of a strip of tape from a tape roll, such that the separation occurs sequentially in a wavefront which moves across the back and front curves as they are being separated.

The lens/mold assembly 12 is positioned in a fixture shown in Figure 4. A primary requirement of this fixture, beyond mechanical stability, is not to interfere with the beam 55 of electromagnetic radiation. The separating fingers 44 of the pry fixture 54 define a U-shaped opening above the back curve mold 16, and prior to demolding, a laser beam is directed through the U-shaped opening 57 to heat the back curve, thus creating a substantial thermal gradient across the mold assembly 12 to assist in separating the back curve from the front curve. For the presently described system, only the back mold portion 16 is heated by exposure to radiation. The back mold portion is thinner than the front mold portion 14, and allows rapid, non-destructive heating of the polystyrene sufficient to create a large thermal gradient. The thicker front mold portion containing a larger amount of polystyrene would not be heated as rapidly, and thereby not produce the same thermal gradient without localized overheating problems.

The side by side assemblies 12 of the front and back curves are held in the pallet 10 with the flanges 26 and tabs 28 of the front curves being in slightly recessed positions and the flanges 36 and tabs 38 of the rear curves 16 being in slightly elevated positions, such that as the pallet 10 travels on an assembly line towards the demolding apparatus, the retaining fingers 42 and separating or lifting fingers 44 readily slide between the separated side flanges 26, 36 of the front and back curves.

Figure 3 illustrates a preferred sequence of movements of a pry fixture 54, rotationally mounted on a shaft 60, relative to a pallet 10 supporting a two by four array of front and back curve assemblies 12. In a first position in the upper left portion of Figure 2, the pallet 10, moving on a conveyor, moves the front and back curve assemblies 12 in the pallet into the position illustrated in Figure 1 in which retaining fingers 42 are positioned above opposite sides of the flange 26 around the front curve 14 to restrain the front curve 14 in the pallet against upward movement. Lifting fingers 44 are positioned below opposite sides of the flange 36 around the back curve mold 16 to lift and pry the back curve mold 16 from the restrained front curve mold 14. As illustrated in Figure 1, the contact lens mold assemblies 12 are supported in the pallet with the annular flanges 26 and tabs 28 of the front curve mold 14 recessed slightly below the upper surface of the pallet, and with the annular flanges 36 and tabs 38 of the back curve mold 16 raised above the upper surface of the pallet, to allow the retaining fingers 42 and lifting fingers 44 to slide between the spaced flanges 26, 38, as the conveyor moves the pallet into the position shown in Figure 1.

In the second position, shown in Figure 3b, after illumination of the back curve by a laser beam, the articulated arm 64 rotates the pry fixture 54 to separate the upper back curve from the lower front curve, with the rotation causing the separating finger member to rotate to pry apart and separate the back curve from the front curve.

In the third position, shown in Figure 3c, the pry fixture 54 is raised upwardly approximately 10 mm from the pallet.

In the fourth position, shown in Figure 3d, the pallet 10 is moved to the left by the conveyor, the pry fixture 54 is rotated back to its original position, and the pry fixture 54 is conveyed in X and Y directions, as described in further detail hereinbelow, to remove the separated back mold half from the pry fixture 54.

In the fifth position, shown in Figure 3e, another pallet 10', with unseparated back and front curve assemblies, is moved by the conveyor into a position under the pry fixture, and the pry fixture 54 is conveyed back in X and Y directions into a demolding position, as described in further detail hereinbelow.

In the sixth position, shown in Figure 3f, the pry fixture 54 is lowered adjacent to the next pallet 10' to reposition the pry fixture 54 relative to the next pallet 10' for the next demolding operation.

The pallet 10' is then conveyed to the left to reassume the first position, shown in Figure 3a, in which the separating fingers and retaining fingers are positioned between the spaced opposed flanges of the joined back and front curve assemblies.

Pursuant to the present invention, the back curve lens mold 16 is heated by a laser beam to create a differential expansion of the heated mold polymer relative to the cooler lens polymer, which shifts one surface with respect to the other. The resultant shear force breaks the polymerized lens/polymer mold adhesion and assists in separation of the mold portions 14, 16. The greater the temperature gradient between the surfaces of the mold portions, the greater the shearing force and the easier the mold portions separate. This effect is greatest when there is maximum thermal gradient. As time continues, heat is lost through conduction from the back mold portion into the lens polymer and the front mold portion, and then collectively into the surrounding environment. The heated back mold portion is, therefore, promptly removed so that very little energy is transferred to the polymer lens, avoiding the possibility of thermal decomposition of the lens.

Heating the back curve is accomplished by the use of a source of electromagnetic radiation, preferably a carbon dioxide (CO₂) laser, applied to at least one of the mold portions. The laser is preferably of about 80 watts at a wavelength of 10.6 µm. The exposure of the mold portion to the laser is between one half and one second.

While a CO₂ laser producing radiation in the mid-infrared range at a wavelength of 10.6 microns was used in one embodiment, it is also possible to use a high powered UV laser or a high intensity electromagnetic radiation emitter of any type wherein the radiation produced is absorbed by the mold material sufficiently to cause an increase in mold material temperature.

In the case of lasers, both mid-infrared and UV, the laser energy is approximately 60% efficient because the polystyrene mold material is nearly 100% absorptive and only a tiny fraction of the incident radiation is reflected or scattered. In this way, little or no energy is lost to atmospheric absorption, so only the sample is heated.

Also, because of the absorptive nature of the mold material at these frequencies, most of the laser energy is absorbed within several wavelengths travel into the material. From that point, heat is transferred only by conduction from the surface. For that reason, on initial exposure to the laser beam, a substantial thermal gradient is formed between the exposed exterior surface and the surface of the mold portion in contact with the lens.

Preferably, a carbon dioxide (CO₂) laser applies radiation to at least one of the mold portions and may be split into two beams to simultaneously heat the back curve of two mold assemblies. It has been found through empirical testing that the laser is preferably of about 80 watts per mold assembly at a wavelength of 10.6 µm. The exposure time of the mold to the laser is between one half and one second. Lasers of this power range are available both in flowing gas and sealed laser types. In one embodiment of the laser demolding apparatus, a Laser Photonics model 580 cw/pulse laser was utilized.

A preferred embodiment was found by experimentation. While it has been found that a laser power output of 3 to 4 watts is sufficient to cause heating of a polystyrene mold portion so that the mold can be mechanically separated, it was determined that a much higher powered laser, up to 500 watts, is preferred. Increasing the laser power and decreasing the exposure duration was found to increase the thermal gradient and increase the ease and consistency with which the mold portions could be separated.

It was found that if a lens/mold combination were sufficiently underexposed, the separation forces would still be high. Lens damage such as tearing and mold damage such as breaking would result.

If a lens/mold combination were overexposed to the laser energy, separation of the mold portions and removal of the lens would again be difficult. Mold damage would result such as oxidizing and melting (softening), and loss of mold rigidity would frustrate mold separation. In addition, overexposure thermally degrades the lens.

After heating the back mold portion with the laser, a preferred method for removing the back mold portion from the front mold portion is to apply a relative tensile force between the mold portions. It was determined empirically that such mechanical force was best applied less than 0.3 seconds after exposure to the radiation. Although no adverse effects would be contemplated if there was less time between exposure and mechanical removal, in practical terms the time between exposure and mold separation would be between about 0.2 and about 1.5 seconds. Beyond a delay of 1.5 seconds the difficulties in mold separation and lens removal would be the same as those resulting from underexposure, as described above.

A significant quality consideration and advantage of the present invention is the consistent retention of the lens in the front mold portion when the back mold portion is laser heated and removed in accordance with the above technique.

With the optimal exposure time and appropriate demolding mechanism, the mold portions can be separated and the lens removed from the mold in approximately 5 seconds.

The above is, by way of explanation, for the preferred polystyrene mold system, and as can be readily appreciated by one skilled in the art, the radiation wavelengths, power levels, and exposure times must be appropriately adjusted according to the above considerations to achieve optimal characteristics for other lens/mold material systems.

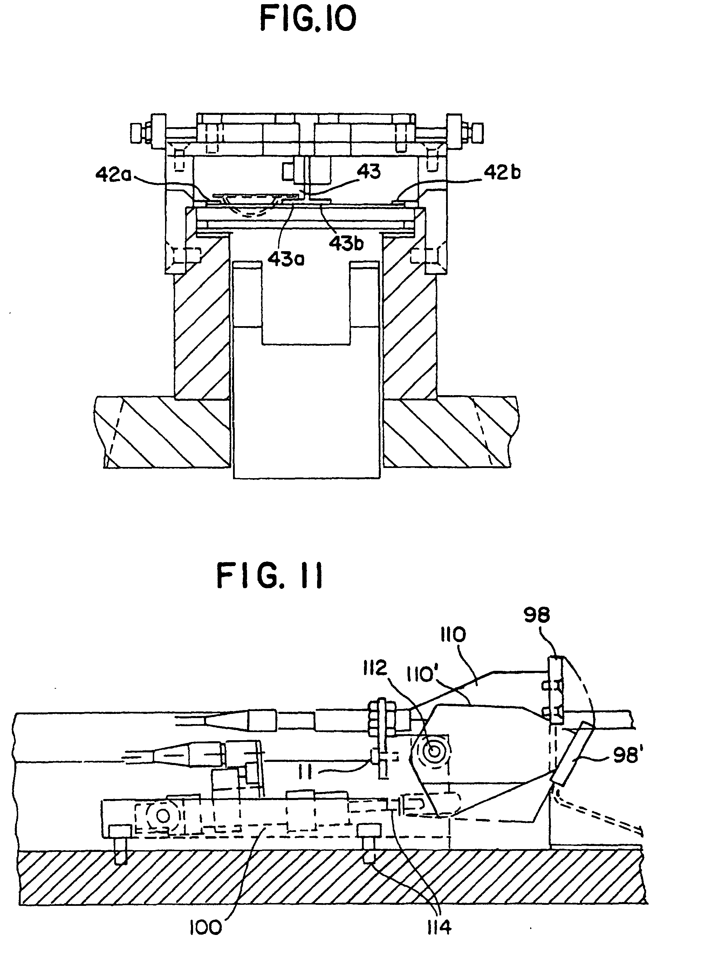

To apply a tensile force between the mold halves, the front curve mold half is held in place as illustrated in Figures 9 and 10, wherein a pair of thin metal retaining fingers 42, 43 are fixably mounted above track rails 46 and pallet 10 to secure the front curve mold half 14 in pallet 10 during the prying operation. Retaining finger 43 is an inverted T shaped member and secures one front curve mold half 14 with one flange 43a of the inverted T, and engages a second front curve mold half with a second flange 43b. The second flange 43b cooperates with a further flange 42b to secure the second front curve mold half in position.

As the pallet 10 is sequentially advanced through the laser demolding apparatus, the flanges 42-43 sequentially engage each row of mold assemblies to secure the front curve mold half. The back curve mold half flanges 36 are engaged by a pry fixture 54, diagrammatically illustrated in Figure 4, which engages both sides of flange 36 as the pallet 10 is advanced into position by the conveyor system. Pallet 10 is then stopped, and a laser beam 55 is directed through the opening 57 between the retaining fingers 42 and the prying fingers 44 against the back mold half 16. The pry fixture 54 is then rotated about axis 56 in the direction of arrow C in Figure 4 to apply a tensile force to the back curve mold half 16. The upper part of the pry fixture 54 rotates about axis 56 so that after exposure of the back curve mold portion to the laser, the fingers 44 pry the back curve mold portion up. The entire assembly is then lifted approximately 10 mm as indicated by arrows B-B in Figure 4 to remove the back curve mold part completely. It has been empirically determined that when the metal pry fingers 44 are stopped under the flange, and then tilted back approximately 18°, the overall quality of the lens removed, and the resultant yield was better than currently employed pry techniques which only lift from a single side, and do not control the axis of the pivot point.

It was also empirically determined that the mechanical prying force was best supplied less than 0.3 seconds after exposure to the radiation. Although no adverse effects would be contemplated if there was less time between exposure and mechanical removal, in practical terms the time between exposure and mold separation would be between about 0.2 and about 1.5 seconds.

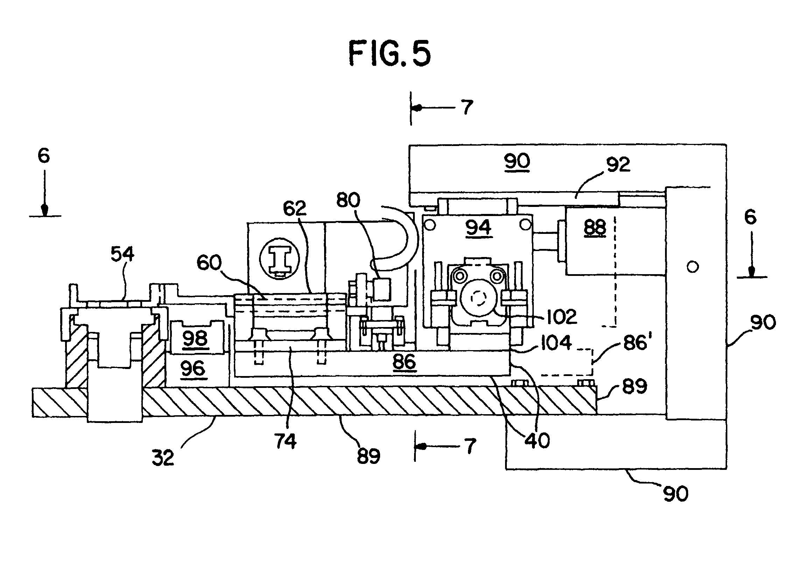

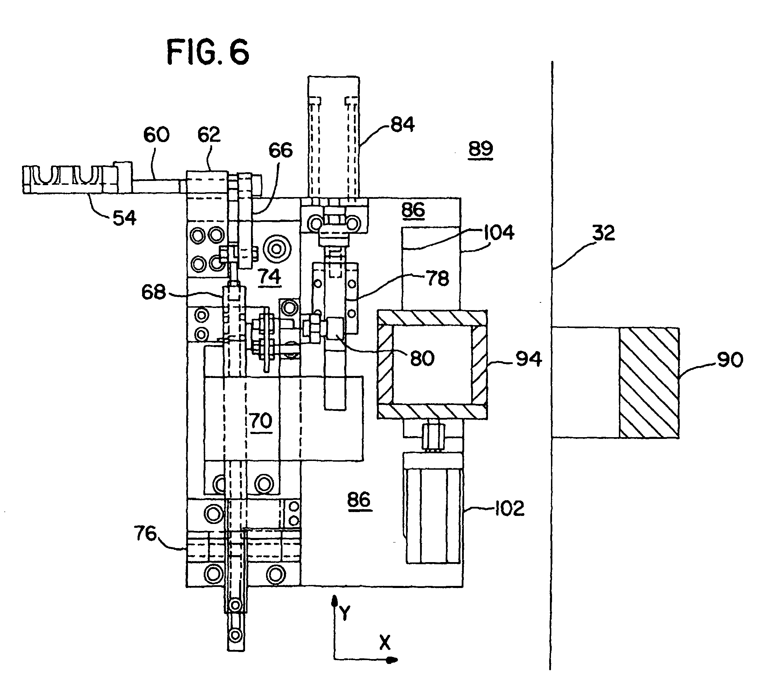

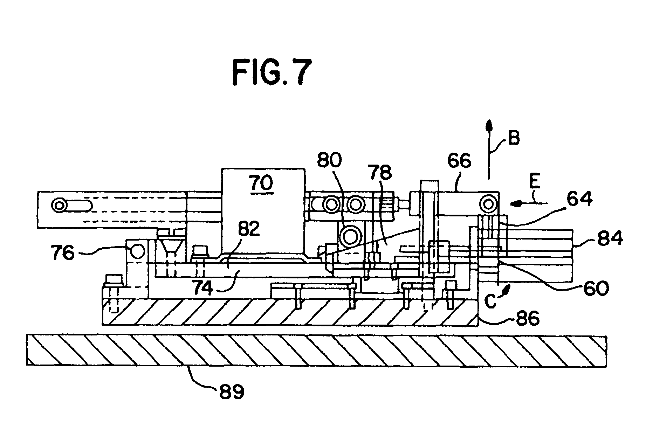

A preferred embodiment of the apparatus for demolding the back curve mold halves is more fully illustrated in Figures 5, 6, 7, 8, 9 and 10, wherein Figure 5 is an elevational view of the apparatus, Figure 6 is a plan view taken along section line 6-6 of Figure 5, and Figure 7 is an elevational side view taken along section 7-7 of Figure 5. Figure 8 is a top plan view similar to Figure 5, illustrating the demolding apparatus positioned adjacent to a conveyor system for the sequential movement of pallets containing contact lens mold assemblies through the demolding apparatus. Figure 9 is a top planar view of the front curve retaining elements, while Figure 10 is a partially cross-sectional view of a portion of the laser demolding embodiment of Figure 9, also illustrating the front curve retaining guide elements.

As illustrated in Figure 9, pallet 10 is on the second of a plurality of demolding cycles wherein a laser delivers intense electromagnetic energy beams 55 directed through laser masks 58 to the second row of mold assemblies in pallet 10. Simultaneously therewith, the first row of mold assemblies is being demolded by the pry fixture 54, as illustrated and described with respect to Figure 4. Pry fixture 54 is rotated by shaft 60 about axis 56 within journal bearing 62 by a pair of links 64 and 66 which are illustrated in Figures 4 and 7. As illustrated in Figure 7, link 66 is pulled in the direction of arrow E by a rack 68 which is driven by a pinion on a stepper motor 70. Stepper motor 70 thereby rotates shaft 60 in the direction indicated by the arrow C in Figures 4 and 7 through approximately 18° of arc to separate the back curve mold half 16 from the front curve mold half 14.

After the pry fixture 54 and shaft 60 have been rotated, the pry fixture 54 is lifted upwardly in the direction of arrows B, Figures 4 and 7. The pry fixture 54 is mounted at one end of a platform 74 which pivots about a shaft 76 at the second and opposite end of the platform 74 to raise and lower the pry fixture 54. The platform 74 is pivoted about shaft 76, and is driven in rotation by a slidable cam 78 which engages a roller can follower 80 mounted on the pivotable platform 74. Slidable cam 78 is advanced by a pneumatic drive motor 84 to raise shaft 60 approximately 10 mm so that the attached pry fixture 54 may be retracted for disposal of the back curve mold halves 16 after they have been separated from the mold assembly.

Each of the aforementioned components are mounted on a further movable platform 86 which is translatable in both the X and Y directions, as shown in Figures 6 and 8, in order to dispose of the separated back curve mold halves 16, as will be described hereinafter. The demolding apparatus includes a stationary base 89, upon which is mounted a stationary tower 90, relative to which the movable platform 86 is translated in both X and Y directions. Platform 86 is suspended from the stationary tower 90 and is mounted for reciprocal movement along the X axis along an X track 92. Once the pry fixture 54 has separated the back curve mold halves 16, and the pry fixture has been lifted free of pallet 10, platform 86 is shifted to the right along the X axis, as illustrated in Figures 6 and 8, by a pneumatic X drive motor 88 to the position 86', shown in phantom in Figure 5. In the right position of the movable base, illustrated by dashed lines 86' in Figure 5, the pry fixture 54 is moved to a position adjacent to a back curve scraper 98, Figure 8, which removes the back curves from the pry fixture 54 and deposits the back curves in a receptacle 96. Platform 86 is shifted to the right in the X direction in order to place the separated back curve mold halves held by the pry fixture 54 over a disposal receptacle 96, Figures 5 and 8. Simultaneously, the back curve scraper 98 is elevated by a pneumatic motor 100 to a position parallel with, and just below, the surface of pry fixture 54.

Figure 11 illustrates the back curve scraper 98 which is secured to a pivotally mounted scraper fixture 110, which rotates about a shaft 112. The scraper fixture 110 is driven by a pneumatic motor 100 and drive shaft 114, to assume one of two positions 98, 110, or 98', 110', as illustrated in Figure 11. The position 98, 110 illustrated in Figure 11 places the back curve scraper 98 in an elevated position to remove or scrape the separated back curve molds from the pry fixture 54 as the platform 86 is shifted along the Y axis, in a downward direction as shown in Figure 8, to scrape the separated mold curves 16 from the pry fixture 54 and cause them to thereby drop into the receptacle 96. Platform 86 is shifted in the Y axis by a pneumatic motor 102 which is fixedly mounted to the platform 86 and the drive shaft of which engages vertical column 94 which extends downwardly from track 92 on stationary tower 90. Platform 86 has a Y track 104 mounted thereon, as illustrated best in Figures 5 and 6, such that the platform 86 and track 104 can translate along the Y axis relative to vertical column 94.

After removal of the separated mold curves 16 from the pry fixture 54, platform 86 is then reciprocated back along the Y axes, upwardly as illustrated in Figure 8, and then back along the X axes, to the left as illustrated in Figure 8, to its original position, as illustrated in Figures 5 and 8. The slidable cam 78 is then withdrawn by drive motor 84 and the pry fixture 54 is lowered into a demolding position above pallet 10, ready for the next demolding operation. The laser is then energized to heat the second row of mold assemblies in pallet 10, and pallet 10 is then incrementally advanced by the conveyor to place the heated second row of mold assemblies into a demold position. Pallet 10 is constrained through the demolding apparatus on the conveyor by rails 46 which prevent vertical movement and any pitch, yaw or roll of the pallet during the demolding operation.

The pneumatic drive motors 88 and 102 basically drive the movable base 86 in an L path back and forth between end stop positions, and end stop detectors are employed to sense the end positions and deactivate the motors. One leg of the L translates the pry fixture 54 in an X direction between the position illustrated in Figure 5 and the position 86' at which the pry fixture 54 is positioned adjacent to the back curve scraper 98. The second leg of the L translates the pry fixture 54 in a Y direction as illustrated in Figure 8 to translate the pry fixture 54, and the rear curve members supported thereby after demolding, by the back curve scrapers 98 which remove the rear curve members from the pry fingers 44, and the back curve members then fall into a back curve disposal receptacle 96.

While several embodiments and variations of the present invention for a laser demolding apparatus and method are described in detail herein, it should be apparent that the disclosure and teachings of the present invention will suggest many alternative designs to those skilled in the art.

| Concordance of Johnson & Johnson Vision Products Applications Filed on 9th June 1995 | | | | |
|---|---|---|---|---|
| | J&J Ref. | Spec Ref. | C&R Ref. | Priority Appln. No. |
| 1. | VTN-73 | 8997.KLK | P13914EP | USSN 257802 |
| | Low oxygen molding of soft contact lenses. | | | |
| | | | | |
| 2. | VTN-74 | 8998.KLK | P13913EP | USSN 258556 |
| | Automated method and apparatus for hydrating soft contact lenses. | | | |
| | | | | |
| 3. | VTN-75 | 8999.WCR | P13909EP | USSN 257801 |
| | Laser demolding apparatus and method. | | | |
| | | | | |
| 4. | VTN-76 | 9000.WCR | P13908EP | USSN 257794 |
| | Molding arrangement to achieve short mold cycle time. | | | |
| | | | | |
| 5. | VTN-77 | 9001-III.SF9 | P13907EP | USSN 257786 |
| | Contact lens production line pallet system. | | | |
| | | | | |
| 6. | VTN-78 | 9002.JSS | P13910EP | USSN 258267 |
| | Apparatus for removing and transporting articles from molds. | | | |
| | | | | |
| 7. | VTN-79 | 9003-DTB | P13947EP | USSN 257785 |
| | Mold halves and molding assembly for making contact lenses. | | | |
| | | | | |
| 8. | VTN-80 | 9004.KLK | P13950EP | USSN 258264 |
| | Method and apparatus for contact lens mold filling and assembly. | | | |
| | | | | |
| 9. | VTN-81 | 9005-KLK | P13949EP | USSN 257791 |
| | Automated apparatus and method for consolidating products for packaging. | | | |
| | | | | |
| 10. | VTN-82 | 9006.SF9 | P13948EP | USSN 258265 |
| | Mold separation method and apparatus. | | | |
| | | | | |
| 11. | VTN-83 | 9007.KLK | P13945EP | USSN 257792 |
| | Mold clamping and precure of a polymerizable hydrogel. | | | |
| | | | | |
| 12. | VTN-84 | 9008-LP | P13946EP | USSN 257871 |
| | Method and apparatus for demolding ophthalmic contact lenses. | | | |
| | | | | |
| 13. | VTN-85 | 9009-LP | P13993EP | USSN 258263 |
| | Method and apparatus for applying a surfactant to mold surfaces. | | | |
| | | | | |
| 14. | VTN-86 | 9010-KLK | P13995EP | USSN 258557 |
| | Automated apparatus and method for preparing contact lenses for inspection and packaging. | | | |
| | | | | |
| 15. | VTN-87 | 9011-DTB | P13994EP | USSN 257799 |
| | Ultraviolet cycling oven for polymerization of contact lenses. | | | |
| | | | | |
| 16. | VTN-88 | 9012-LP | P13997EP | USSN 257795 |
| | Printed label structure for packaging arrangements. | | | |
| | | | | |
| 17. | VTN-91 | 9015.SF8 | P13998EP | USSN 257800 |
| | Computer system for quality control correlations. | | | |
| | | | | |
| 18. | VTN-92 | 9016.KLK | P13996EP | USSN 258654 |
| | Consolidated contact lens molding. | | | |
| 19. | VTN-93. | 9017.WCR | P13999EP | USSN 257787 |
| | Packaging arrangement | | | |
| | | | | |
| 20. | VTN-96 | 9166-II.SF6 | P14005EP | USSN 257790 |
| | Production line tracking and quality control system. | | | |
| | | | | |
| 21. | VTN-101 | 9292.JSS | P14009EP | USSN 257857 |
| | Lens inspection system and method. | | | |
| | | | | |
| 22. | VTN-102 | 9293.JSS | P14007EP | USSN 258340 |
| | System and method for inspecting lenses. | | | |
| | | | | |
| 23. | VTN-140 | 9119.JSS | P14008EP | USSN 258266 |
| | A method of positioning ophthalmic lenses. | | | |
| | | | | |
| 24. | VTN-150 | 9167.SF5 | P14006EP | USSN 257793 |
| | Interactive control system for packaging control. | | | |
| | | | | |
| 25. | VTN-151 | 9168-LP | P14003EP | USSN 257789 |
| | Apparatus and method for preparing printing labels. | | | |
| | | | | |
| 26. | VTN-152 | 9169-LP | P14004EP | USSN 257788 |
| | Apparatus and method for sterilization and secondary packaging. | | | |

## Claims

1. An automated apparatus for automatically demolding a mold assembly (12), comprising a first front mold portion (14) which has a central mold section with a surrounding flange (26), a corresponding second back mold portion (16) which has a central mold section with a surrounding flange (36), a molded ophthalmic lens formed between the front and back mold portions (14, 16), wherein the flanges (26, 36) of the front and back mold portions (14, 16) are spaced apart relative to each other, the apparatus comprising:
a) restraining means for restraining the first mold portion (14) of the mold assembly (12), including restraining fingers (42) which are positioned between and on opposite sides of the spaced flanges (26, 36) of the first and second mold portions (14, 16) and against the flange (26) of the first mold portion (14);
b) a separating fixture including separating fingers (44) which are positioned between and on opposite sides of the spaced flanges (26, 36) of the first and second mold portions (14, 16) and against the flange (36) of the second mold portion (16);
c) means for rotating the separating fingers (44) about a fixed axis relative to the restraining means to progressively separate and peel the second mold portion (16) from the lens in the first mold portion (14); and
d) means for lifting the second mold portion (16) upwardly to remove the second mold portion (16) from the first mold portion (14).

2. Apparatus as claimed in claim 1, including means for heating the second mold portion (16) with electromagnetic radiation, which is absorbed by the second mold portion (16) to cause a substantial temperature gradient between the second mold portion (16) and the contact lens being demolded, with the temperature gradient causing a differential expansion and shifting of the surface of the heated second mold portion (16) relative to the surface of the lens to lessen the adhesion between the lens and the second mold portion (16) to assist in the separation of the mold portions (14, 16), while leaving the lens in the first mold portion (14).

3. Apparatus as claimed in claim 2, wherein the means for heating includes a laser producing electromagnetic radiation having a wavelength between 1 µm and 20 µm.

4. Apparatus as claimed in claim 1, 2 or 3, wherein the mold assembly is carried by a pallet (10), which carries an array of mold assemblies (12), and further including a conveyor means for conveying the pallet (10) into a position in the demolding apparatus wherein said restraining fingers (42) and separating fingers (44) are positioned between the spaced flanges (26, 36) of the first and second mold portions (14, 16) with the restraining fingers (42) against the flange (26) of the first mold portion (14) and the separating fingers (44) against the flange (36) of the second mold portion (16).

5. Apparatus as claimed in any of claims 1 to 4, wherein said separating fixture (44) is supported by a pivot shaft (60) for rotation relative to the fixedly mounted restraining means (42).

6. Apparatus as claimed in claim 5, wherein during the demolding operation the separating fixture (44) is rotated through an angle of approximately 18 degrees.

7. Apparatus as claimed in claim 5 or 6, wherein the separating fixture pivot shaft (60) is positioned at a spaced distance from the restraining means (42).

8. Apparatus as claimed in any preceding claim, wherein said separating fixture (44) is mounted on a first movable base (74) for elevational movement relative to the fixedly mounted restraining means (42).

9. Apparatus as claimed in claim 8, wherein said first movable base (74) is pivotally mounted about a rotational shaft (76) at one end thereof, and said separating fixture (44) is mounted at a second and opposite end of said first movable base (74).

10. Apparatus as claimed in claim 9, further including a ramp cam (78) driven by a pneumatic motor (84), and said movable base includes a cam follower roller (80) positioned on said ramp cam (78), such that as the ramp cam (78) is driven by the pneumatic motor (84), the cam follower roller (80) rotates the first movable base (74) about the rotational shaft (76) to raise and lower the separating fixture (44) mounted on the second end of the first movable base (74).

11. Apparatus as claimed in any preceding claim, wherein said separating fixture (44) includes a gripping means for gripping a second mold portion (16) which is separated from a first mold portion (14).

12. Apparatus as claimed in claim 11, further including a back curve mold remover (98) to remove said back curve mold portion (16) from said separating fixture (44) after separation of the mold portions (14, 16), and means for moving said separating fixture (44) relative to the back curve remover (18) during which the back curve mold portion (16) is removed from the separating fixture (44).

13. Apparatus as claimed in claim 12, further including means for vertically moving said back curve remover (98) into and out of a back curve removal position relative to said separating fixture (44).

14. Apparatus as claimed in claim 12 or 13, wherein said first movable base (74) is mounted on a second movable base (86) which is mounted for X translational movement relative to a fixed base (89).

15. Apparatus as claimed in claim 14, wherein a pneumatic drive motor (88) drives said movable base (86) in X translational movement relative to the fixed base (89).

16. Apparatus as claimed in claim 15, wherein said second movable base (86) is also mounted for Y translational movement relative to a fixed base (89).

17. Apparatus as claimed in claim 16, wherein a pneumatic drive motor (102) drives said movable base (86) in Y translational movement relative to said fixed base (89).

18. Apparatus as claimed in any preceding claim, wherein the first mold portion (14) is a concave front curve mold half and the second mold portion (16) is a convex back curve mold half, with a contact lens molded between the first and second mold halves.

19. Apparatus as claimed in any preceding claim, wherein said separating fingers (44) are joined together to form a U-shaped separator.

20. Apparatus as claimed in claim 19, further including means for directing a laser beam through the U in the U-shaped separator to heat the second mold portion (16).

21. Apparatus as claimed in any preceding claim, including conveyor means for conveying the mold assembly (12) to insert said restraining fingers (42) and separating fingers (44) between the flange members (26, 36) of the mold assembly (12) as a consequence of said conveyance, and control means for sequentially actuating said conveyor means to convey the mold assembly (12) into a demolding position in the demolding apparatus, and then rotating the separating fingers through an arc of approximately 18 degrees to sequentially lift and peel said back curve mold portion (16) relative to the front curve mold portion (14) to thereby separate said back curve mold portion (16) from said front curve mold portion (14) and the contact lens therein.

22. Apparatus as claimed in claim 21, wherein a plurality of contact lens mold assemblies (12) are carried on a pallet (10) by said conveyor means, and said demolding apparatus includes a plurality of pairs of restraining means (42) and separating fixtures (44).

23. Apparatus as claimed in claim 22, wherein said pallet carries two rows of contact lens mold assemblies (12), and said demolding apparatus includes first and second sets of restraining means (42) and separating fixtures (44), with a first set positioned on a first side of said pallet (10) and a second set positioned on a second side of said pallet (10).

24. Apparatus as claimed in any preceding claim, when dependent on claim 11, further including a back curve mold remover (98) to remove said back curve mold portion (16) from said separating fixtures (44) after separation of the mold portions (14, 16), and means for independent reciprocal movement of said separating fixture (44) relative to the back curve remover (98).

25. Apparatus as claimed in claim 13 and 24, wherein said first movable base (74) is mounted on a second movable base (86) which is mounted for X and Y translational movements relative to a fixed base (89), an X pneumatic drive motor (88) drives said movable base (86) in X translational movement relative to the fixed base (89), and a Y pneumatic drive motor (102) drives said movable base (86) in Y translational movement relative to said fixed base (89).

26. An automated method for automatically demolding a mold assembly (12), comprising a first front mold portion (14) which has a central mold section with a surrounding flange (26), a corresponding second back mold portion (16) which has a central mold section with a surrounding flange (36), and having a molded ophthalmic lens formed between the front and back mold portions (14, 16), wherein the flanges (26, 36) of the front and back mold portions (14, 16) are spaced apart relative to each other, the method comprising:
a) restraining the first mold portion (14) of the mold assembly by restraining fingers (42) which are positioned between and on opposite sides of the spaced flanges (26, 36) of the first and second mold portions (14, 16) and against the flange (26) of the first mold portion (14);
b) positioning separating fingers (44) between and on opposite sides of the spaced flanges (26, 36) of the first and second mold portions (14, 16) and against the flange (36) of the second mold portion (16);
c) rotating the separating fingers (44) about a fixed axis relative to the restrained first mold portion (14) to progressively separate and peel the second mold portion (16) from the lens in the first mold portion (14); and
d) lifting the second mold portion (16) upwardly to remove the second mold portion (16) from the first mold portion (14).

27. A method as claimed in claim 26, including heating the second mold portion (16) with electromagnetic radiation, which is absorbed by the second mold portion (16) to cause a substantial temperature gradient between the second mold portion (16) and the contact lens being demolded, with the temperature gradient causing a differential expansion and shifting of the surface of the heated second mold portion (16) relative to the surface of the lens, lessening the adhesion between the lens and the second mold portion (16) to assist in the separation of the mold portions (14, 16), while leaving the lens in the first mold portion (14).

28. A method as claimed in claim 27, wherein the heating step utilizes a laser producing electromagnetic radiation having a wavelength between 1 µm and 20 µm.

29. A method as claimed in claim 26, 27 or 28, including carrying the mold assembly (12) in a pallet (10), which carries an array of mold assemblies (12), and conveying the pallet (10) into a position wherein the restraining fingers (42) and separating fingers (44) are positioned between the spaced flanges (26, 36) of the first and second mold portions (14, 16), with the restraining fingers (44) against the flange (26) of the first mold portion (14) and the separating fingers (44) against the flange (36) of the second mold portion (16).

30. A method as claimed in any one of claims 26 to 29, wherein during the demolding operation the separating fingers (44) are rotated through an angle of approximately 18 degrees.

31. A method as claimed in any one of claims 26 to 30, wherein said separating fingers (44) grip a second mold portion (16) which is separated from a first mold portion (14).

32. A method as claimed in claim 31, further including removing the second mold portion (16) from said separating fingers (44) after separation of the mold portions (14, 16).

33. A method as claimed in any one of claims 26 to 32, wherein the first portion (14) is a concave front curve mold half and the second mold portion (16) is a convex back curve mold half, with a contact lens molded between the first and second mold halves.

34. A method as claimed in any one of claims 26 to 33, further including directing a laser beam through the separating fingers (44) to heat the second mold portion (16).

35. A method as claimed in any one of claims 26 to 34, including conveying the mold assembly (12) to insert the restraining fingers (42) and separating fingers (44) between the flange members of the mold assembly (12) as a consequence of said conveyance, and then rotating the separating fingers through an arc of approximately 18 degrees to sequentially lift and peel the back curve mold portion (16) relative to the front curve mold portion (14) to thereby separate the back curve mold portion (16) from the front curve mold portion (14) and the contact lens therein.

36. A method as claimed in claim 35, including carrying a plurality of mold assemblies (12) on a pallet (10) during said conveying step.

37. A method as claimed in claim 36, wherein said pallet (10) contains two rows of contact lenses and mold assemblies (12), and positioning a first set of restraining fingers (42) and separating fingers (44) on a first side of said pallet (10), and positioning a second set of restraining fingers (42) and separating fingers (44) on a second side of said pallet (10).

## Patentansprüche

1. Eine automatisierte Vorrichtung zur automatischen Entformung einer Gießformeinheit (12), umfassend ein erstes vorderes Gießformteil (14), das über einen zentralen Gießformabschnitt mit einem umliegenden Flansch (26) verfügt, ein korrespondierendes zweites hinteres Gießformteil (16), das über einen zentralen Gießformabschnitt mit einem umliegenden Flansch (36) verfügt, eine zwischen dem vorderen und dem hinteren Gießformteil (14, 16) gebildete gegossene ophthalmische Linse, wobei die Flansche (26, 36) des vorderen Gießformteils und die des hinteren Gießformteils (14,16) relativ zueinander beabstandet sind und wobei die Vorrichtung umfaßt:
a) ein Rückhaltemittel zum Zurückhalten des ersten Gießformteils (14) der Gießformeinheit (12), enthaltend Rückhaltefinger (42), welche zwischen den und auf gegenüberliegenden Seiten der beabstandeten Flansche (26, 36) der ersten und der zweiten Gießformteile (14, 16) und gegen den Flansch (26) des ersten Gießformteils (14) angebracht sind;
b) eine Trennvorrichtung, enthaltend Trennfinger (44), die zwischen den und auf gegenüberliegenden Seiten der beabstandeten Flansche (26, 36) der ersten und zweiten Gießformteile (14, 16) und gegen den Flansch (36) des zweiten Gießformteils (16) angebracht sind;
c) Mittel zum Drehen der Trennfinger (44) um eine feste Achse relativ zum Rückhaltemittel, um das zweite Gießformteil (16) zunehmend von der Linse in dem ersten Gießformteil (14) zu trennen und abzuschälen; und
d) Mittel zum Aufwärtsheben des zweiten Gießformteils (16), um das zweite Gießformteil (16) von dem ersten Gießformteil (14) zu entfernen.

2. Vorrichtung nach Anspruch 1, enthaltend ein Mittel zum Erwärmen des zweiten Gießformteils (16) mittels elektromagnetischer Strahlung, welche von dem zweiten Gießformteil (16) absorbiert wird und einen beträchtlichen Temperaturgradienten zwischen dem zweiten Gießformteil (16) und der zu entformenden Kontaktlinse verursacht, wobei der Temperaturgradient eine differentielle Expansion und eine Verschiebung der Oberfläche des erwärmten zweiten Gießformteils (16) relativ zu der Oberfläche der Linse und ein Abschwächen der Haftfähigkeit zwischen der Linse und dem zweiten Gießformteil (16) bewirkt, um die Trennung der Gießformteile (14, 16) zu unterstützen, während die Linse in dem ersten Gießformteil (14) belassen wird.

3. Vorrichtung nach Anspruch 2, worin das Mittel zum Erwärmen einen Laser umfaßt, der elektromagnetische Strahlung mit einer Wellenlänge zwischen 1 µm und 20 µm generiert.

4. Vorrichtung nach den Ansprüchen 1, 2 oder 3, worin die Gießformeinheit in einer Palette (10) gehalten wird, welche eine Ansammlung an Gießformeinheiten (12) trägt, und welche des weiteren ein Beförderungsmittel zum Befördern der Palette (10) in eine Position in der Entformungsvorrichtung enthält, in der besagte Rückhaltefinger (42) und Trennfinger (44) zwischen den beabstandeten Flanschen (26, 36) des ersten und des zweiten Gießformteils (14, 16) mit den Rückhaltefingern (42) gegen den Flansch (26) des ersten Gießformteils (14) und den Trennfingern (44) gegen den Flansch (36) des zweiten Gießformteils (16) plaziert sind.

5. Vorrichtung nach einem der Ansprüche 1 bis 4, worin besagte Trennvorrichtung (44) zur Rotation relativ zum fest montierten Rückhaltemittel (42) von einer sich drehenden Welle (60) unterstützt wird.

6. Vorrichtung nach Anspruch 5, worin die Trennvorrichtung (44) während des Entformungsvorgangs um einen Winkel von ungefähr 18° gedreht wird.

7. Vorrichtung nach Anspruch 5 oder 6, worin die sich drehende Welle (60) der Trennvorrichtung beabstandet von dem Rückhaltemittel (42) plaziert ist.

8. Vorrichtung nach einem der vorhergehenden Ansprüche, worin besagte Trennvorrichtung (44) zur Aufwärtsbewegung gegenüber dem fest montierten Rückhaltemittel (42) auf einer ersten beweglichen Unterlage (14) montiert ist.

9. Verfahren nach Anspruch 8, worin besagte erste bewegliche Unterlage (14) drehbar an dem einen Ende einer sich drehenden Welle (16) montiert ist und worin besagte Trennvorrichtung (44) an einem zweiten, gegenüberliegenden Ende der besagten ersten beweglichen Unterlage (14) montiert ist.

10. Vorrichtung nach Anspruch 9, weiterhin enthaltend einen rampenförmigen Nocken (78), angetrieben durch einen pneumatischen Motor (84), wobei besagte bewegliche Unterlage eine Nockenstößelrolle (80), plaziert auf besagtem rampenförmigen Nocken (78), enthält, so daß, wenn der rampenförmige Nocken (78) über den pneumatischen Motor (84) angetrieben wird, die Nockenstößelrolle (80) die erste bewegliche Unterlage (74) um die drehbare Welle (76) rotiert, um die an dem zweiten Ende der ersten beweglichen Unterlage (74) montierte Trennvorrichtung zu heben und zu senken.

11. Vorrichtung nach einem der vorhergehenden Ansprüche, worin besagte Trennvorrichtung (44) eine Greifvorrichtung zum Greifen des zweiten Gießformteils (16), welches von dem ersten Gießformteil (14) getrennt worden ist, enthält.

12. Vorrichtung nach Anspruch 11, weiterhin enthaltend einen Entferner (98) für die hintere Gießformwölbung, um das hintere Gießformwölbungsteil (16) von besagter Trennvorrichtung (44) nach Trennung der Gießformteile (14, 16) abzunehmen, sowie Mittel zum Bewegen besagter Trennvorrichtung (44) relativ zum Entfemer (98) für die hintere Gießformwölbung, während das hintere Gießformwölbungsteil (16) von der Trennvorrichtung (44) entfernt wird.

13. Vorrichtung nach Anspruch 12, weiterhin enthaltend eine Vorrichtung zum vertikalen Bewegen des Entfemers (98) für die hintere Wölbung in die Position zum Abnehmen der hinteren Wölbung und aus dieser heraus relativ zu besagter Trennvorrichtung (44).

14. Vorrichtung nach den Ansprüchen 12 oder 13, worin besagte erste bewegliche Unterlage (14) auf einer zweiten beweglichen Unterlage (86) montiert ist, die auf einer festen Unterlage (89) montiert ist und relativ zu dieser X-translational bewegbar ist.

15. Vorrichtung nach Anspruch 14, worin ein pneumatisch angetriebener Motor (88) besagte bewegliche Unterlage (86) in X-translationaler Bewegung relativ zu der festen Unterlage (89) antreibt.

16. Vorrichtung nach Anspruch 15, worin besagte zweite bewegliche Unterlage (86) ebenso für eine Y-translationale Bewegung relativ zur festen Unterlage (89) montiert ist.

17. Vorrichtung nach Anspruch 16, worin ein pneumatisch angetriebener Motor (102) besagte bewegliche Unterlage (86) in Y-translationaler Bewegung relativ zu besagter festen Unterlage (89) antreibt.

18. Vorrichtung nach einem der vorhergehenden Ansprüche, worin das erste Gießformteil (14) eine konkave vordere Gießformwölbungshälfte und das zweite Gießformteil (16) eine konvexe hintere Gießformwölbungshälfte darstellt mit einer geformten Kontaktlinse zwischen der ersten und der zweiten Gießformhälfte.

19. Vorrichtung nach einem der vorhergehenden Ansprüche, worin besagte Trennfinger (44) miteinander verbunden sind und eine U-förmige Trennvorrichtung bilden.

20. Vorrichtung nach Anspruch 19, weiterhin enthaltend ein Mittel, um einen Laserstrahl durch das U der U-förmigen Trennvorrichtung zu lenken, um das zweite Gießformteil (16) zu erwärmen.

21. Vorrichtung nach einem der vorhergehenden Ansprüche, enthaltend ein Beförderungsmittel zum Befördern der Gießformeinheit (12), um besagte Rückhaltefinger (42) und Trennfinger (44) zwischen die Flanschglieder (26, 36) der Gießformeinheit (12) als Folge besagter Beförderung einzuführen, sowie Kontrollmittel zur sequentiellen Auslösung besagter Beförderungsvorrichtung, um die Gießformeinheit (12) in der Entformungsvorrichtung in eine Entformungsposition zu befördern, worauf die Trennfinger in einem Bogen von ungefähr 18° gedreht werden, um besagtes hinteres Gießformwölbungsteil (16) relativ zu dem vorderen Gießformwölbungsteil (14) zunächst zu heben und dann abzuschälen, um dadurch besagtes hinteres Gießformwölbungsteil (16) von besagtem vorderen Gießformwölbungsteil (14) und der darin befindlichen Kontaktlinse zu trennen.

22. Vorrichtung nach Anspruch 21, worin eine Vielzahl an Gießformeinheiten (12) für Kontaktlinsen über besagte Beförderungsvorrichtung auf einer Palette (10) getragen werden und worin besagte Entformungsvorrichtung eine Vielzahl an Paaren aus Rückhaltemitteln (42) und Trennvorrichtungen (44) enthält.

23. Vorrichtung nach Anspruch 22, worin zwei Reihen an Gießformeinheiten (12) für Kontaktlinsen von besagter Palette getragen werden und worin besagte Entformungsvorrichtung einen ersten und einen zweiten Satz an Rückhaltemitteln (42) und Trennvorrichtungen (44) enthält, wobei ein erster Satz auf der ersten Seite der besagten Palette (10) und ein zweiter Satz auf der zweiten Seite der besagten Palette (10) plaziert sind.

24. Vorrichtung nach einem der vorhergehenden Ansprüche, sofern abhängig von Anspruch 11, weiterhin enthaltend einen Entferner (98) für die hintere Wölbungsgießform zur Entfernung besagten hinteren Gießformwölbungsteils (16) von besagten Trennvorrichtungen (44) nach der Trennung der Gießformteile (14, 16) sowie Mittel zur unabhängigen wechselseitigen Bewegung besagter Trennvorrichtungen (44) relativ zum Entfemer (98) für die hintere Wölbung.

25. Vorrichtung nach den Ansprüchen 13 und 24, worin besagte erste bewegliche Unterlage (74) auf einer zweiten beweglichen Unterlage (86) montiert ist, welche für X- und Y-translationale Bewegungen relativ zu einer festen Unterlage (89) montiert ist, und worin ein X-pneumatisch getriebener Motor (88) besagte bewegliche Unterlage (86) in X- translationaler Bewegung relativ zu der festen Unterlage (89) antreibt und worin ein Y-pneumatisch angetriebener Motor (102) besagte bewegliche Unterlage (86) in Y-translationaler Bewegung relativ zu besagter fester Unterlage (89) antreibt.

26. Ein automatisiertes Verfahren zur automatischen Entformung einer Gießformeinheit (12), umfassend ein erstes vorderes Gießformteil (14), das über einen zentralen Gießformabschnitt mit einem umliegenden Flansch (26) verfügt, ein korrespondierendes zweites hinteres Gießformteil (16), das über einen zentralen Gießformabschnitt mit einem umliegenden Flansch (36) verfügt, wobei eine gegossene ophthalmische Linse zwischen dem vorderen und dem hinteren Gießformteil (14, 16) gebildet wird, worin die Flansche (26, 36) des vorderen und des hinteren Gießformteils (14, 16) relativ zueinander beabstandet sind, wobei das Verfahren umfaßt
a) das Zurückhalten des ersten Gießformteils (14) der Gießformeinheit über Rückhaltefinger (42), welche zwischen den und auf gegenüberliegenden Seiten der beabstandeten Flansche (26, 36) der ersten und der zweiten Gießformteile (14, 16) und gegen den Flansch (26) des ersten Gießformteils (14) angebracht sind;
b) die Plazierung der Trennfinger (44) zwischen den und auf gegenüberliegenden Seiten der beabstandeten Flansche (26, 36) des ersten und des zweiten Gießformteils (14, 16) und gegen den Flansch (36) des zweiten Gießformteils (16);
c) das Drehen der Trennfinger (44) um eine feste Achse relativ zu dem zurückgehaltenen ersten Gießformteil (14), um das zweite Gießformteil (16) in zunehmender Weise von der Linse in dem ersten Gießformteil (14) zu trennen und abzuschälen; und
d) das Abnehmen des zweiten Gießformteils (16) nach oben, um das zweite Gießformteil (16) von dem ersten Gießformteil (14) zu entfernen.

27. Verfahren nach Anspruch 26, umfassend das Erwärmen des zweiten Gießformteils (16) mittels elektromagnetischer Strahlung, die von dem zweiten Gießformteil (16) absorbiert wird und einen beträchtlichen Temperaturgradienten zwischen dem zweiten Gießformteil (16) und der zu enformenden Linse bewirkt, wobei der Temperaturgradient eine differentielle Expansion und eine Ablösung der Oberfläche des erwärmten zweiten Gießformteils (16) relativ zu der Fläche der Linse verursacht und die Haftfähigkeit zwischen der Linse und dem zweiten Gießformteil (16) vermindert, um die Trennung der Gießformteile (14, 16) zu unterstützen, während die Linse in dem ersten Gießformteil (14) verbleibt.

28. Ein Verfahren nach Anspruch 27, worin in dem Erwärmungsschritt ein Laser verwendet wird, der elektromagnetische Strahlung mit einer Wellenlänge zwischen 1 µm und 20 µm generiert.

29. Ein Verfahren nach den Ansprüchen 26, 27 oder 28, umfassend das Vorliegen der Gießformeinheit (12) in einer Palette (10), die eine Ansammlung an Gießformeinheiten (12) trägt, und das Befördern der Palette (10) in eine Position, in der die Rückhaltefinger (42) und die Trennfinger (44) zwischen den beabstandeten Flanschen (26, 36) des ersten und des zweiten Gießformteils (14, 16) plaziert sind, mit den Rückhaltefingern (44) gegen den Flansch (26) des ersten Gießformteils (14) und den Trennfingern (44) gegen den Flansch (36) des zweiten Gießformteils (16).

30. Ein Verfahren nach einem Ansprüche 26 bis 29, worin die Trennfinger (44) während des Entformungsvorgangs um einen Winkel von ungefähr 18° gedreht werden.

31. Ein Verfahren nach einem der Ansprüche 26 bis 30, worin besagte Trennfinger (44) ein zweites Gießformteil (16) ergreifen, das von dem ersten Gießformteil (14) getrennt worden ist.

32. Ein Verfahren nach Anspruch 31, weiterhin enthaltend das Entfernen des zweiten Gießformteils (16) von besagten Trennfingern (44) nach der Trennung der Gießformteile (14, 16).

33. Ein Verfahren nach einem der Ansprüche 26 bis 32, worin das erste Teil (14) eine konkave vordere Gießformwölbungshälfte und das zweite Gießformteil (16) eine konvexe hintere Gießformwölbungshälfte darstellt mit einer gegossenen Kontaktlinse zwischen der ersten und der zweiten Gießformhälfte.

34. Ein Verfahren nach einem der Ansprüche 26 bis 33, weiterhin enthaltend,
einen Laserstrahl durch die Trennfinger (44) zu leiten, um das zweite Gießformteil (16) zu erwärmen.

35. Ein Verfahren nach einem der Ansprüche 26 bis 34, enthaltend
die Beförderung der Gießformeinheit (12), bei dem die Rückhaltefinger (42) und die Trennfinger (44) als Folge besagter Beförderung zwischen die Flanschglieder der Gießformeinheit (12) eingeführt werden, und das anschließende Drehen der Trennfinger um einen Bogen von ungefähr 18°, um aufeinander folgend das hintere Gießformwölbungsteil (16) relativ zum vorderen Gießformwölbungsteil (14) zu heben und abzuschälen, um so das hintere Gießformwölbungsteil (16) von dem vorderen Gießformwölbungsteil (14) und der darin befindlichen Kontaktlinse zu trennen.

36. Ein Verfahren nach Anspruch 35, umfassend
das Vorliegen einer Vielzahl an Gießformeinheiten (12) auf der Palette (10) während des besagten Beförderungsschritts.

37. Ein Verfahren nach Anspruch 36, worin besagte Palette (10) zwei Reihen an Kontaktlinsen und Gießformeinheiten (12) enthält und wobei ein erster Satz an Rückhaltefingern (42) und Trennfingern (44) auf der ersten Seite besagter Palette (10) und zweiter Satz an Rückhaltefingern (42) und an Trennfingern (44) auf der zweiten Seite besagter Palette (10) plaziert werden.

## Revendications

1. Appareil automatisé pour démouler, de manière, automatique, un ensemble de moule (12), comprenant une première partie de moule avant (14) qui comporte une section de moule central avec un bourrelet entourant (26), une seconde partie de moule arrière (16) correspondante qui présente une section de moule central avec un bourrelet entourant (36), une lentille ophtalmique moulée formée entre les parties avant et arrière de moule (14,16), dans lequel les bourrelets (26, 36) des parties avant arrière de moule (14, 16) sont espacées l'un par rapport à l'autre, l'appareil comprenant :
a) un moyen de retenue pour retenir la première partie de moule (14) de l'ensemble de moule (12), comportant des doigts de retenue (42) qui sont positionnés entre, et sur, des côtés opposés des bourrelets espacés (26, 36) des première et secondes parties de moule (14, 16), et contre le bourrelet (26) de la première partie de moule (14) ;
b) un appareil fixe de séparation comprenant des doigts de séparation (44) qui sont positionnés entre, et sur, des côtés opposés des bourrelets espacés (26, 36) des première et seconde parties de moule (14, 16) et contre le bourrelet (36) de la seconde partie (16) ;
c) un moyen pour tourner les doigts de séparation (44) autour d'un axe fixe par rapport au moyen de retenue pour séparer et arracher, de manière progressive la seconde partie de moule (16) de la lentille dans la première partie de moule (14) ; et
d) un moyen pour soulever la seconde partie de moule (16) vers le haut pour enlever la seconde partie de moule (16) hors de la première partie de moule (14).

2. Appareil selon la revendication 1, comprenant un moyen pour chauffer la seconde partie de moule (16) au moyen d'un rayonnement électromagnétique, qui est absorbé par la seconde partie de moule (16) pour induire un gradient de température important entre la seconde partie de moule (16) et la lentille de contact qui est démoulée, le gradient de température induisant une dilatation différentielle et un décalage de la surface de la seconde partie de moule (16) chauffée par rapport à la surface de la lentille pour diminuer l'adhérence entre la lentille et la seconde partie de moule (16) en vue de faciliter la séparation des parties de moule (14, 16) tout en laissant la lentille dans la première partie de moule (14).

3. Appareil selon la revendication 2, dans lequel le moyen de chauffage comprend un laser produisant un rayonnement électromagnétique ayant une longueur d'onde entre 1 µm et 20 µm.

4. Appareil selon la revendication 1, 2 ou 3, dans lequel l'ensemble de moule est transporté par une palette (10), qui transporte une matrice d'ensembles de moule (12) et comprend, en outre, un moyen d'acheminement pour acheminer la palette (10) jusqu'à un emplacement dans l'appareil de démoulage dans lequel lesdits doigts de retenue (42) et lesdits doigts de séparation (44) sont positionnés entre les bourrelets espacés (26, 36) des première et seconde parties de moule (14, 16), les doigts de retenue (42) reposant contre le bourrelet (26) de la première partie de moule (14) et les doigts de séparation (44) reposant contre un bourrelet (36) de la seconde partie de moule (16).

5. Appareil selon l'une quelconque des revendications 1 à 4, dans lequel ledit appareil fixe de séparation (44) est supporté par un arbre pivot (60) pour rotation par rapport au moyen de retenue (42) monté de manière fixe.

6. Appareil selon la revendication 5, dans lequel pendant l'opération de démoulage, l'appareil fixe de séparation (44) est tourné selon d'un angle d'approximativement 18 degrés.

7. Appareil selon la revendication 5 ou 6, dans lequel l'arbre pivot(60) de l'appareil fixe de séparation est positionné à une distance espacée du moyen de retenue (42).

8. Appareil selon l'une quelconque des revendications précédentes, dans lequel l'appareil fixe de séparation (44) est monté sur une première base mobile (74) pour un déplacement en élévation par rapport au moyen de retenue (42) monté de manière fixe.

9. Appareil selon la revendication 8, dans lequel ladite première base mobile (74) est montée, avec faculté de pivotement, autour d'un arbre rotatif (76) au niveau de l'une de ses extrémités, et ledit appareil fixe de séparation (44) est monté au niveau d'une seconde extrémité, opposé de ladite première base mobile (74).

10. Appareil selon la revendication 9, comprenant en outre une came à rampe (78) entraînée par un moteur pneumatique (84), et ladite base mobile comprend un rouleau suiveur de came (80) positionné sur ladite came à rampe (78), de sorte que à mesure que la came à rampe (78) est entraînée par le moteur pneumatique (84) le rouleau suiveur de came (80) fait tourner la première base mobile (74) autour de l'arbre rotatif (76) pour lever et abaisser l'appareil fixe de séparation (44) monté sur la seconde extrémité de la première base mobile (74).

11. Appareil selon l'une quelconque des revendications précédentes, dans lequel ledit appareil fixe de séparation (44) comprend un moyen de saisie en vue de saisir une seconde partie de moule (16) qui est séparé d'une première partie de moule (14).

12. Appareil selon la revendication 11, comportant en outre un dispositif d'enlèvement (98) de moule à incurvation arrière pour enlever ladite partie de moule à incurvation arrière (16) dudit appareil fixe de séparation (44) après séparation des parties de moule (14, 16), et un moyen pour déplacer ledit appareil fixe de séparation (44) par rapport au dispositif d'enlèvement (98) à incurvation arrière, pendant lequel la partie de moule à incurvation arrière (16) est enlevée de l'appareil fixe de séparation (44).

13. Appareil selon la revendication 12, comprenant en outre un moyen pour déplacer verticalement ledit dispositif d'enlèvement (98) à incurvation arrière dans, vers, et hors de, une position d'enlèvement à incurvation arrière par rapport audit accessoire fixe de séparation (44).

14. Appareil selon la revendication 12 ou 13, dans lequel ladite première base mobile (74) est montée sur une seconde base mobile (86) qui est montée pour mouvement de translation X par rapport à une base fixe (89).

15. Appareil selon la revendication 14, dans lequel un moteur d'entraînement pneumatique (88) entraîne ladite base mobile (86) dans un mouvement de translation X par rapport à la base fixe (89).

16. Appareil selon la revendication 15, dans lequel ladite seconde base mobile (86) est également montée pour mouvement de translation Y par rapport à une base fixe (89).

17. Appareil selon la revendication 16, dans lequel un moteur d'entraînement (102) entraîne ladite base mobile (86) dans un mouvement de translation Y par rapport à ladite base fixe (89).

18. Appareil selon l'une quelconque des revendications précédentes, dans lequel la première partie du moule (14) est une moitié de moule à incurvation avant concave et la seconde partie de moule (16) est une moitié de moule à incurvation arrière convexe, avec une lentille de contact moulée entre les première et seconde moitiés de moule.

19. Appareil selon l'une quelconque des revendications précédentes, dans lequel lesdits doigts de séparation (44) sont joints ensemble pour former un séparateur en forme de U.

20. Appareil selon la revendication 19, comprenant en outre un moyen pour diriger un faisceau laser à travers le U dans le séparateur en forme de U pour chauffer la seconde partie de moule (16).

21. Appareil selon l'une quelconque des revendications précédentes, comprenant un moyen d'acheminement pour transporter l'ensemble de moule (12) pour insérer lesdits doigts de retenue (42) et lesdits doigts de séparation (44) entre les éléments de bourrelets (28, 38) de l'ensemble de moule (12) comme une conséquence dudit transport, et un moyen de commande pour actionner, de manière séquentielle, ledit moyen d'acheminement pour transporter l'ensemble de moule (12) dans une position de démoulage dans l'appareil de démoulage, puis tourner les doigts de séparation selon un arc d'approximativement 18 degrés pour soulever et arracher, de manière séquentielle, ladite partie de moule à incurvation arrière (16) par rapport à la partie de moule à incurvation avant (14) séparant, par cet effet, ladite partie de moule à incurvation arrière (16) de ladite partie de moule à incurvation avant (14) et la lentille de contact qui s'y trouve.

22. Appareil selon la revendication 21, dans lequel une pluralité d'ensembles (12) de moule de lentilles de contact sont portés sur une palette (10) par ledit moyen d'acheminement, et ledit appareil de démoulage comprenant une pluralité de paires de moyen de retenue (42) et d'appareils fixes de séparation (44).

23. Appareil selon la revendication 22, dans lequel ladite palette porte deux matrices d'ensemble (12) de moule de lentilles de contact, et ledit appareil de démoulage comprenant des premier et second ensembles des moyens de retenue (42) et d'accessoires fixes de séparation (44), avec un premier ensemble positionné sur un premier côté de ladite palette (10) et un second ensemble positionné sur un second côté de ladite palette (10).

24. Appareil selon l'une quelconque des revendications précédentes, lorsque dépendante de la revendication 11, comportant en outre un dispositif d'enlèvement (98) de moule à incurvation arrière pour enlever ladite partie de moule à incurvation arrière (16) desdits appareils fixes de séparation (44) après la séparation des parties de moule (14, 16), et un moyen de déplacement en va et vient indépendant dudit accessoire fixe de séparation (44) du dispositif d'enlèvement (98) de moule à incurvation arrière.

25. Appareil selon les revendications 13 et 24, dans lequel ladite première base mobile (74) est montée sur une seconde base mobile (86) qui est montée pour mouvement de translation X et Y par rapport à une base fixe (89), un moteur d'entraînement pneumatique X (88) entraînant ladite base mobile (86) dans un mouvement de translation X par rapport à une base fixe (89), et un moteur d'entraînement pneumatique Y (102) entraîne ladite base mobile (86) dans un mouvement de translation Y par rapport à ladite base fixe (89).

26. Procédé automatisé pour démouler, de manière automatique, un ensemble de moule (12) comprenant une première partie de moule avant (14) qui comporte une section de moule central avec un bourrelet entourant (26), une seconde partie de moule arrière (16) correspondante qui comporte une section de moule central avec un bourrelet entourant (36) et comportant une lentille ophtalmique moulée formée entre les parties de moule avant et arrière (14, 16) dans lequel les bourrelets (26, 36) des parties de moule avant et arrière (14, 16) sont espacés l'un par rapport à l'autre, le procédé comprenant les étapes consistant à :
a) retenir la première partie de moule (14) d'un ensemble de moule à l'aide de doigts de retenue (42) qui sont positionnés entre, et sur, des côtés opposés des bourrelets espacés (26, 36) des première et seconde parties de moule (14, 16) et contre le bourrelet (26) de la première partie de moule (14).
b) positionner les doigts de séparation (44) entre, et sur, les côtés opposés des bourrelets espacés (26, 36) des première et seconde parties de moule (14, 16) et contre le bourrelet (36) de la seconde partie de moule (16) ;
c) faire tourner les doigts de séparation (44) autour d'un axe fixe par rapport à la première partie de moule de retenue (44) pour séparer et arracher, de manière progressive, la seconde partie de moule (16) de la lentille dans la première partie de moule (14) ; et
d) soulever la seconde partie de moule (16) vers le haut pour enlever la seconde partie de moule (16) de la première partie de moule (14).

27. Procédé selon la revendication 26, comprenant le réchauffement de la seconde partie de moule (16) à l'aide d'un rayonnement électromagnétique, qui est absorbé par la seconde partie de moule (16) pour induire un gradient de température élevé ou important entre la seconde partie de moule (16) et la lentille de contact qui est démoulée, le gradient de température induisant une dilatation différentielle et un décalage de la surface de la seconde partie de moule chauffé (16) par rapport à la surface de la lentille, réduisant l'adhésion entre la lentille et la seconde partie de moule (16) pour assister la séparation des parties de moule (14, 16) tout en laissant la lentille dans la première partie de moule (14).

28. Procédé selon la revendication 27, dans lequel l'étape de chauffage utilise un laser produisant un rayonnement électromagnétique comportant une longueur d'onde entre 1 µm et 20 µm.

29. Procédé selon la revendication 26, 27 ou 28, comprenant les étapes consistant à transporter l'ensemble de moule (12) dans une palette (10) laquelle supporte une rangée de moule (12) ainsi qu'une rangée d'ensemble de moule (12), et amener la palette (10) dans une position dans laquelle les doigts de retenue (42) et les doigts de séparation (44) sont positionnés entre les bourrelets espacés (26, 36) des première et seconde parties de moule (14, 16) avec les doigts de retenue (44) entre le bourrelet (26) de la première partie de moule (14) et les doigts de séparation (44) contre le bourrelet (36) de la seconde partie de moule (16).

30. Procédé selon l'une quelconque des revendications 26 à 29, dans lequel pendant l'opération de démoulage, les doigts de séparation (44) sont entraînés en rotation selon un angle d'approximativement 18 degrés.

31. Procédé selon l'une quelconque des revendications 26 à 30, dans lequel lesdits doigts de séparation (44) saisissent une seconde partie de moule (16) qui est séparée d'une première partie de moule (14).

32. Procédé selon la revendication 31, comprenant en outre l'étape consistant à enlever la seconde partie de moule (16) au moyen desdits doigts de séparation (44) après séparation des parties de moule (14, 16).

33. Procédé selon l'une quelconque des revendications 26 à 32, dans lequel la première partie (14) est une moitié de moule à incurvation avant concave et la seconde partie de moule (16) est une moitié de moule à incurvation arrière convexe, avec une lentille de contact moulée entre les première et seconde moitiés de moule.

34. Procédé selon l'une quelconque des revendications 26 à 33, comprenant en outre l'étape consistant à diriger un faisceau laser à travers les doigts de séparation (44) pour chauffer la seconde partie de moule (16).

35. Procédé selon l'une quelconque des revendications 26 à 34, comprenant les étapes consistant à déplacer l'ensemble de moule (12) pour insérer les doigts de retenue (14) et les doigts de séparation (44) entre les éléments de bourrelets de l'ensemble de moule (12) comme une conséquence de ladite étape de transport, puis orienter les doigts de séparation selon un arc d'approximativement 18 degrés pour lever et arracher, de manière séquentielle, la partie de moule à incurvation arrière (16) par rapport à la partie de moule à incurvation avant (14) pour séparer, par cet effet, la partie de moule à incurvation arrière (16) de la partie de moule à incurvation avant (14) et la lentille de contact qui y est située.

36. Procédé selon la revendication 35, comprenant l'étape consistant à porter une pluralité d'ensembles de moules (12) sur une palette (10) pendant ladite étape d'acheminement.

37. Procédé selon la revendication 36, dans lequel ladite palette (10) comprend deux matrices de lentilles de contact et d'ensemble de moule (12), et l'étape consistant à positionner un premier ensemble de doigts de retenue (42) et de doigts de séparation (44) sur un premier côté de ladite palette (10) et l'étape consistant à positionner un second ensemble de doigts de retenue (42) et de doigts de séparation (44) sur un second côté de ladite palette (10).
